Europäisches Patentamt

European Patent Office

Office européen des brevets

(11) Veröffentlichungsnummer: **0 163 109**
**B1**

(12) **EUROPÄISCHE PATENTSCHRIFT**

(45) Veröffentlichungstag der Patentschrift: **04.07.90**

(21) Anmeldenummer: **85104841.3**

(22) Anmeldetag: **22.04.85**

(51) Int. Cl.⁵: **G 01 F 11/26**

(54) Dosiergerät.

(30) Priorität: **30.04.84 DE 3416008**

(43) Veröffentlichungstag der Anmeldung:
**04.12.85 Patentblatt 85/49**

(45) Bekanntmachung des Hinweises auf die
Patenterteilung:
**04.07.90 Patentblatt 90/27**

(84) Benannte Vertragsstaaten:
**AT BE CH DE FR GB IT LI NL**

(56) Entgegenhaltungen:
**EP-A-0 001 411**
**US-A-2 877 937**
**US-A-3 007 612**
**US-A-4 345 700**

(73) Patentinhaber: **Henkel Kommanditgesellschaft
auf Aktien
Postfach 1100 Henkelstrasse 67
D-4000 Düsseldorf-Holthausen (DE)**

(72) Erfinder: **Meyer, Klaus
Zum Zörr 19
D-4040 Neuss 1 (DE)**
Erfinder: **VOM Hofe, Dieter
Uedesheimer Weg 2
D-5000 Köln 71 (DE)**
Erfinder: **Vierkötter, Peter
Sperberweg 7
D-5090 Leverkusen 3 (DE)**

Courier Press, Leamington Spa, England.

**Beschreibung**

Die Erfindung richtet sich auf eine Dosiervorrichtung zum Ausgeben eines rieselfähigen Produkts aus einem Vorratsbehälter mit einer durch Umwenden in eine Tieflage durch einen Einlaß aus dem Behälter mit veränderlicher Dosiermenge zu füllenden sowie über einen Auslaß zu entleerenden Dosierkammer, wobei die Dosierkammer volumenveränderlich ausgebildet ist und fest miteinander gekoppelte Ein- und Auslaßverschlüsse aufweist, die ein alternatives Verschließen bzw. Öffnen von Einlaß und Auslaß ermöglichen.

Eine derartige Dosiervorrichtung ist aus der US—A—4 345 700 bekannt. Bei dieser Dosiervorrichtung ist mit Hilfe eines um die Gerätelängsachse verschwenkbaren Einsatzstückes das Volumen der Dosierkammer veränderbar. Bei dieser Dosiervorrichtung ist es von Nachteil, daß dort nicht der gesamte Innenraum der Dosiervorrichtung als Dosierkammer ausgebildet werden kann, da sonst ein wechselseitiges Öffnen und Schließen von Einlaß und Auslaß nicht gewährleistet ist. Des weiteren kann daher nicht der gesamte an der Dosiervorrichtung anliegende Querschnitt des Behälters für die Befüllung der Dosierkammer genutzt werden. Schließlich ist durch den in dem Deckel der Dosiervorrichtung ausgebildeten Führungsschlitz für die verstellbare Wand der Dosierkammer keine vollständige Abdichtung der Dosierkammer nach außen hin sichergestellt.

Weitere Dosiervorrichtungen, bei denen um die Gerätelängsachse rotierbar mehrere Dosierkammern angeordnet sind, sind aus der US—A—2 877 937 und der US—A—3 007 612 bekannt. Zum Dosieren rieselfähiger Produkte werden weiterhin auch Kippdosierer gemäß DE-OS 31 20 234 verwendet. Mit dem bekannten Gerät können feine Granulate dosiert werden, das Dosieren erfordert ein zweimaliges Kippen bzw. Auf-den-Kopfstellen der Packung. Die Dosiermenge ist von vornherein festgelegt und nicht veränderbar. Der bekannte Kippdosierer wird fast ausschließlich im Kleinmengen-Dosierbereich, etwa bei Zuckerstreuern, eingesetzt.

Für erheblich größere Dosiermengen, wie sie bei Waschpulver vorkommen, ist der aus der DE-OS 31 20 234 bekannte Kippdosierer nicht geeignet, weil er ein mengenmäßig abgestuftes Ausbringen von Produkt aus einem Vorratsbehälter nicht zuläßt. Beispielsweise den Anwendern von Waschpulvern wird nämlich empfohlen, die Dosiermenge pro Waschgang auf den Härtegrad des zur Verfügung stehenden Waschwassers abzustimmen, um einerseits das erwünschte Reinigungsergebnis zu erzielen, und andererseits eine unnötige Belastung des Abwassers durch Überdosierung zu vermeiden sowie natürlich auch eine sparsame Produktverwendung zu garantieren. Aus diesen Gründen geben Waschmittelhersteller in der Regel vier verschiedene Dosiermengen für weiches, mittelhartes, hartes und sehr hartes Wasser auf den fraglichen Packungen als Empfehlung an. Zum Dosieren werden Dosierbecher verwendet, die teils voll, teils dreiviertelvoll oder halbvoll aus dem Vorratsbehälter gefüllt werden müssen.

Weil neuerdings Waschpulver auch als Konzentrat auf den Markt kommt, gewinnt sowohl ein exaktes als auch ein dem Härtegrad des Wassers angepaßtes Produktdosieren an Bedeutung. Ein Dosiergerät, mit verstellbarem Dosiervolumen als Dosierverschluß eines Behälters für flüssige oder rieselfähige Produkte wird in der DE-OS 31 50 465 vorgeschlagen. Dieser Verschluß besitzt eine becherförmige, auf die jeweilige Behälteröffnung aufzusetzende Kappe mit Dosierskala. Hierbei kann das Dosieren letzlich nicht viel genauer als bei einem üblichen Dosierbecher erfolgen.

Ein anderes als Kippdosierer geeignetes Dosiergerät wird in der älteren DE-OS 33 27 627 beschrieben. Dieses Gerät besitzt einen beim Umwenden in eine Tieflage gelangenden, zwischen den freien Enden einer schräg in bezug auf die Gerätemittelachse stehenden Gleitwand und einer Prallwand definierten Austrittskanal. Das Dosiergerät läßt ein Dosieren bei einmaligem Kippen zu, wenn die Gleitwand die Form eines etwa V-förmigen Stegs erhält, die Prallwand aus einer senkrecht zur Mittelachse stehenden Deckelwand und einer schräg zu der Achse verlaufenden Stirnwand gebildet wird und der Austrittskanal etwa rechtwinklig in bezug auf die Mittelachse nach außen ausläuft. Zum Verstellen des Dosierkammervolumens wird der V-förmige Steg etwa radial in bezug auf die Mittelachse bzw. etwa parallel zum Austrittsstutzen verschiebbar gelagert. Mit diesem Kippdosierer kann jedoch von seinem Konzept her nur ungenau dosiert werden.

Der Erfindung liegt die Aufgabe zugrunde, einen Dosierverschluß mit einer durch Schwenken in eine Tieflage alternativ zu füllenden oder zu entleerenden Dosierkammer — vor allem für rieselfähiges Gut — zu schaffen, der ein den Erfordernissen bei Waschmittelkonzentraten entsprechend genaues und mengenmäßig abgestuftes Ausbringen von produkt aus einem Vorratsbehälter sowie ein mehrmaliges Dosieren ohne zusätzliche Schwenkbewegung des Behälters ermöglicht und der zugleich bequem zu handhaben ist.

Bei einer Dosiervorrichtung der eingangs bezeichneten Art wird diese Aufgabe gemäß der Erfindung dadurch gelöst, daß der dem Vorratsbehälter zugewandte Dosierkammerboden oder der dem Vorratsbehälter abgewandte und dem Auslaß zugewandte Dosierkammerdeckel in axialer Richtung relativ zum Behälter verstellbar ist.

Hierdurch wird es ermöglicht, eine Dosierkammer volumenveränderlich und im wesentlichen dem gesamten Querschnitt des anstehenden Behälterhalses angepaßt auszubilden.

Im Kern besteht die Erfindung aus zwei zusammenwirkenden Merkmalen, nämlich einer "Alternativschaltung" der Dosierkammereinlaß- und -auslaßverschlüsse einerseits und einer exakt voreinzustellenden Dosiermenge durch Vorgabe der Kammergröße andererseits. Für die Vorgabe der Dosiermenge umfaßt die Erfindung die Lösung, das Volumen ein und derselben Dosierkammer zu verändern.

Die Alternativschaltung der Dosierkammerein- und -auslaßverschlüsse ermöglicht ein simultanes Öffnen und Schließen der fraglichen Ein- und Ausgänge. Charakteristisch für diese nach Art des sogenannten Drei-Wege-Hahns arbeitende Alternativschaltung sind zwei Stellungen des sowohl die Dosierkammergröße als auch die Dosierkammerverschlüsse kontrollierenden Betätigungsmittels, z.B. Stellrings, nämlich eine ZU-Stellung, in der die Dosierkammer nach außen hin geschlossen und zum Behälterinnern hin geöffnet ist, und eine AUF-Stellung, in der die Dosierkammer nach außen hin geöffnet und zum Behälterinnern hin geschlossen ist. In der ZU-Stellung kann beim Umwenden in die Tieflage Produkt aus dem Behälter in die Dosierkammer einströmen; in der AUF-Stellung kann aus der ebenfalls in eine Tieflage umgewendeten Dosierkammer, die dann gegenüber dem Behälterinnenraum geschlossen ist, Produkt nach außen ausströmen. Da das Füllen des Dosierraums sehr schnell vonstatten geht, kann in der Überkopfstellung — ohne zusätzliches Schwenken — durch wiederholtes AUF/ZU-Drehen auch eine Mehrfachdosierung vorgenommen werden. Verbesserungen und weitere Ausgestaltungen der Erfindung werden in den abhängigen Ansprüchen beschrieben.

Anhand der schematischen Darstellung von Ausführungsbeispielen werden Einzelheiten der Erfindung erläutert. Es zeigen:

Fig. 1 bis 9 ein Dosiergerät mit einer Dosierkammer verstellbaren Dosiervolumens;

Fig. 10 bis 11 ein weiteres Dosiergerät mit einer Dosierkammer verstellbaren Dosiervolumens;

Fig. 17 und 18 ein Dosiergerät mit durch einen Kulissenstein zu fixierender Dosiermengenvoreinstellungen.

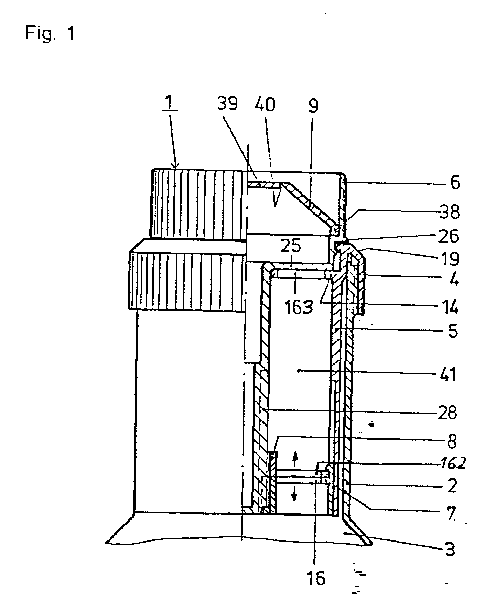

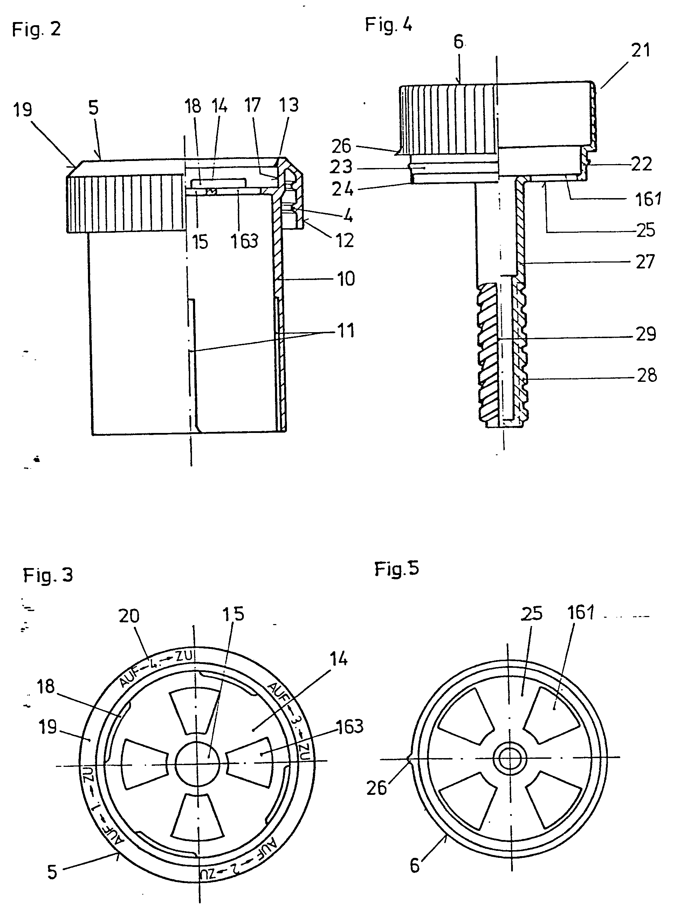

In Fig. 1 wird ein insgesamt mit 1 bezeichnetes Dosiergerät zur Hälfte im Längsschnitt und zur Hälfte in der Seitenansicht dargestellt. Das Dosiergerät besteht aus einem auf dem Hals 2 eines Vorratsbehälters 3, z.B. in einem Gewinde 4, zu befestigenden Grundkörper 5, einem das erfindungsgemäße Befestigungsmittel bildenden Stellring 6, einer Bodenplatte 7, die den Dosierkammerboden bildet, einer Dichtscheibe 8 und einem Ausgießschacht 9. Die einzelnen Bestandteile werden anhand der Fig. 2 bis 9 erläutert.

Fig. 2 und 3 zeigen einerseits in der Seitenansicht und im Längsschnitt und andererseits in der Draufsicht den Grundkörper 5. Er besteht aus einem unten offenen Zylinderrohr 10 mit mehreren Längsnuten 11 an der Innenseite. An das obere Ende des Zylinderrohrs 10 werden ein Schraubring 12 für das Gewinde 4, ein umlaufender Schnappwulst 13 und eine Kopfplatte 14 angeformt. Oberhalb der eine zentrale, runde Bohrung 15 und vier profildurchbrechungen 163 aufweisenden Kopfplatte 14 werden an der abgesetzten Innenwand 17 des Zylinderrohrs 10 vier Klemmrippen 18 vorgesehen. Der Schraubring 12 wird auf seiner Außenseite mit einer schräg abfallenden Stirnfläche 19 mit Einstellhinweisen 20 für die verschiedenen Dosiervolumina ausgestattet.

Fig. 4 und 5 zeigen in der Seitenansicht und im Längsschnitt einerseits sowie in der Draufsicht andererseits den Stellring 6 von Fig. 1. Der Stellring 6 selbst wird aus einem oben offenen Zylinderring 21 mit einem abgesetzten Profilring 22 gebildet, welcher sich in die obere Öffnung der Innenwand 17 am Zylinderrohr 10 des Grundkörpers 5 eindrücken läßt. Gegebenenfalls soll bei diesem Vorgang der Schnappwulst 23 hinter den Schnappwulst 13 des Grundkörpers 5 derart einrasten, daß Stellring 6 und Grundkörper 5 bei gegenseitiger Verdrehbarkeit fest miteinander verbunden sind. Ein kleiner Profilnocken 24 unterhalb des Schnappwulstes 23 dient dazu, die leichtgängige Relativdrehung der beiden Teile zwischen jeweils zwei nebeneinander liegenden Klemmrippen 18 am Grundkörper 5 durch Anschlag an die Klemm-Rippen-Enden zu begrenzen; außerdem soll ein schwergängiges Überfahren des Profilnockens 23 über die Klemmrippen 18 ein ungewolltes Verstellen der vorgewählten Dosiermenge verhindern. In der Winkelstellung des Profilnockens 24 auf dem Umfang der Bodenplatte 25 des Stellrings 6 wird an dessen Zylinderring 21 ein Markierungspfeil 26 vorgesehen.

Der Zylinderring 21 mit dem angrenzenden Profilring 22 wird nach unten abgeschlossen durch die Bodenplatte 25, die den Dosierkammerdeckel bildet, welche vier, mit den Durchbrechungen 163 der Kopfplatte 14 des Grundkörpers 5 im wesentlichen zur Deckung zu bringende Profildurchbrechungen 161 besitzen soll. Jedoch werden die Profildurchbrechungen 161 der Bodenplatte 25 gegenüber denjenigen der Kopfplatte 14 um 45° in Umfangsrichtung versetzt. Zentral an die Bodenplatte 25 wird ein Rohrstück 27 mit einem mehrgängigen Steilgewinde 28 und vier unter 90° angeordneten Längsnuten 29 angeformt. Der Außendurchmesser des Rohrstücks 27 wird geringfügig kleiner als der Durchmesser der Bohrung 15 im Grundkörper 5 vorgegeben, um zu ermöglichen, daß das Rohrstück 27 in der Bohrung 15 gleiten kann.

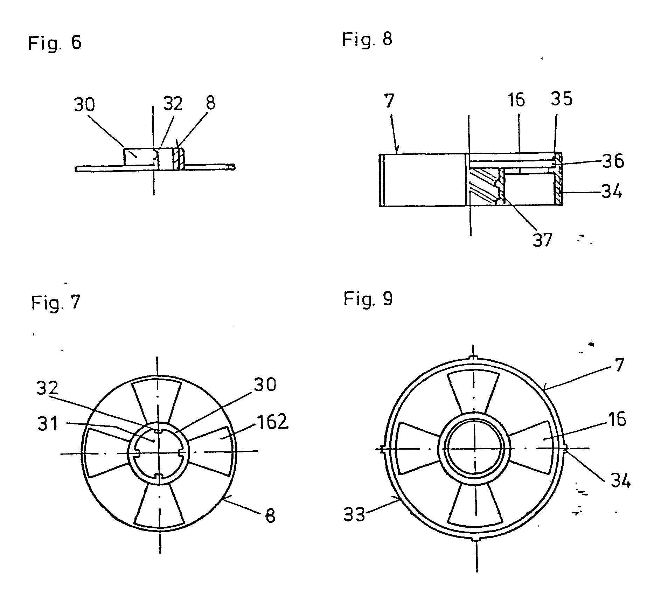

Fig. 6 und 7 zeigen in der Seitenansicht und im Längsschnitt bzw. in der Draufsicht die Dichtscheibe 8 nach Fig. 1 wiederum mit vier zu den Profildurchbrechungen 163 kongruenten Profildurchbrechungen 162, ferner mit einem zylindrischen Ansatz 30 und einer zentralen Bohrung 31, in der vier Profilstege 32 radial nach innen vorspringen. Die Profilstege 32 werden in den Längsnuten 29 am Stellring 6 (Fig. 4) geführt und sichern die Dichtscheibe 8 gegen eine Verdrehung relativ zum Stellring 6.

Die Fig. 8 und 9 zeigen in der Seitenansicht und im Längsschnitt bzw. in der Draufsicht die Bodenplatte 7 nach Fig. 1. Die Bodenplatte 7 wird wiederum mit vier zu den Profildurchbrechungen 163 kongruenten Profildurchbrechungen 16 ausgestattet und enthält am Umfang eine Zylinderwand 33, deren Außendurchmesser in den Innendurchmesser des Zylinderrohrs 10 des Grundkörpers 5 paßt. Von der Zylinderwand 33 radial nach außen vorspringende profilrippen 34 werden bei axialer Relativverschiebung in den Längsnuten 11 des Zylinderrohrs 10 von Fig. 2 geführt. Ein umlaufender Schnappwulst 35 am oberen Ende der Zylinderwand 33 mit darunterliegender Hinterschneidung 36 dient dazu, die Dichtscheibe 8 aufzunehmen und axial zu halten. Ein zentral an die Bodenplatte 7 angeformter Stutzen 37 mit vorzugsweise mehrgängigem Steilgewinde hat die Aufgabe, das Rohrstück 27 des Stellrings 6 mit Gewinde 28 (Fig. 4) aufzunehmen.

Der Ausgießschacht 9 nach Fig. 1 wird mit seinem zylindrischen (unteren) Ende 38 in den offenen Zylinderring 21 des Stellrings 6 (Fig. 4) eingepaßt bzw. eingepreßt. Eine Verschlußplatte 39, die über eine umlaufende Sollbruchstelle 40 an den Ausgießschacht 9 angeformt sein kann, wird vom Anwender vor Inbetriebnahme des Dosiergeräts herausgebrochen.

Das Dosiergerät nach Fig. 1 kann in folgender Weise betrieben werden:

Nach dem Entfernen der Verschlußplatte 39 wird der Stellring 6 mit dem Markierungspfeil 26 auf eine der vier auf den Stirnflächen 19 vorgegebenen Dosiermengen-Bereiche eingestellt. Der Profilnocken 24 kann dabei über eine oder mehrere Klemmrippen 18 bewegt werden. Bei diesem Vorgang wird über das Steilgewinde 28 die Bodenplatte 7 zusammen mit der daran befestigten Dichtscheibe 8 in der eingezeichneten Pfeilrichtung in eine Position bewegt, die das Volumen der Dosierkammer 41 in vorgegebener Weise vergrößert oder verkleinert. Innerhalb der vorgewählten Dosiermengenposition läßt sich der Stellring 6 — jeweils bis zum Anschlag des Profilnockens an den die Position begrenzenden Klemmrippen 18 — leicht zwischen der AUF/ZU-Markierung bewegen.

In der ZU-Stellung befinden sich die Profildurchbrechungen 163 am Grundkörper 5 und die Profildurchbrechungen 161 am Stellring 6 in einer Relativstellung, in der Durchgang und damit der Geräteauslaß gesperrt wird. Zugleich stehen jedoch die profildurchbrechungen 16 in der Bodenplatte 7 und die Profildurchbrechungen 162 der Dichtscheibe 8 deckungsgleich übereinander, so daß die Dosierkammer 41 zum Behälter 3 hin geöffnet wird. In der Überkopfstellung des Dosiergeräts 1 kann daher Produkt aus dem Behälter 3 in den Dosierraum 41 fließen.

Wenn der Stellring 6 in die Position "AUF" gedreht wird, gelangt die Dichtscheibe 8 durch Drehung um 45° gegenüber der Bodenplatte 7 in eine solche Stellung, daß der Durchgang am Kammerboden verschlossen wird und zugleich die Profildurchbrechungen 161 am Stellring 6 und die Profildurchbrechungen 163 im Grundkörper 5 in eine kongruente Position gelangen, so daß das in der Dosierkammer 41 vordosierte Produkt durch den Ausgießschacht 9 ausfließen kann. Nach Zurückdrehen in die ZU-Stellung kann der gesamte Dosiervorgang sofort oder später wiederholt werden.

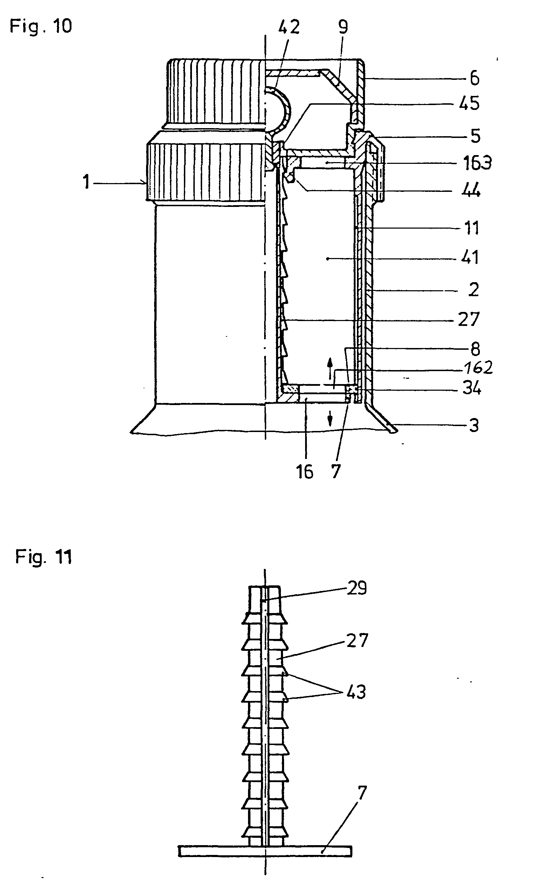

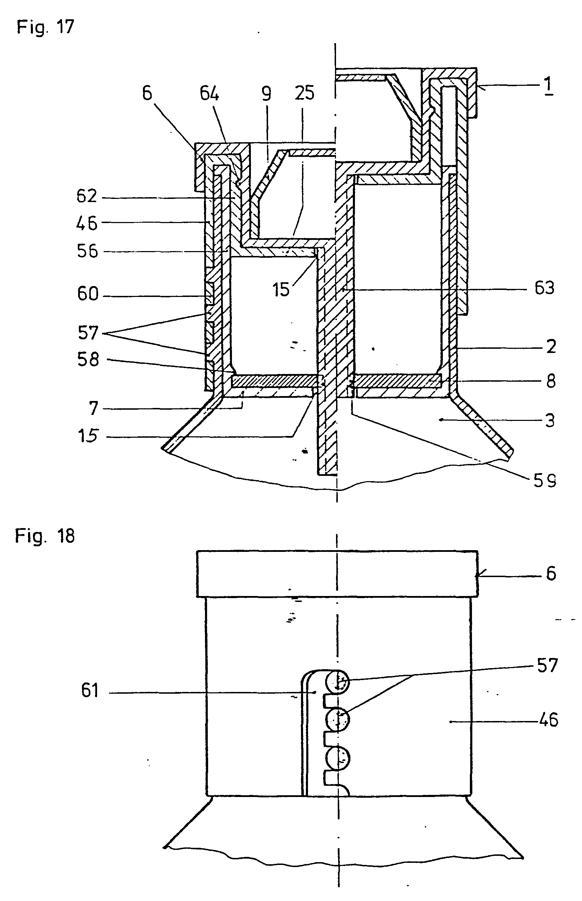

In den Fig. 10 und 11 wird ein alternatives Ausführungsbeispiel eines Dosiergeräts 1 dargestellt. Es unterscheidet sich von dem Dosiergerät nach Fig. 1 bis 9 durch die Art der Dosiermengenvoreinstellung. Das Dosiergerät nach Fig. 10 und 11 besteht aus einem Grundkörper 5, einem Stellring 6, einer Bodenplatte 7, einer Dichtscheibe 8, einem Ziehring 42 und einem Ausgießschacht 9.

Das Rohrstück 27 wird jetzt an die Bodenplatte 7 angeformt. Der Außendurchmesser der Bodenplatte 7 soll etwas kleiner als der Innendurchmesser des Zylinderrohrs 10 des Grundkörpers sein. Das angeformte Rohrstück 27 wird wieder mit vier Längsnuten 29 versehen. Als Besonderheit besitzt es Schnappwülste 43. Der unterste Schnappwulst 43 dient zum axialen Arretieren der Bodenplatte 7, die mit ihren vier Profilrippen 34 wie in Fig. 8 und 9 in die Längsnuten 11 des Grundkörpers 5 eingreift. Die übrigen Schnappwülste 43 des Rohrstücks 27 können zum Fixieren unterschiedlicher Volumina der Dosierkammer 41 verwendet werden.

Zum Verändern des Volumens der Dosierkammer wird am Ziehring 42 gezogen und dadurch die Bodenplatte 7 zusammen mit der Dichtscheibe 8 Stufe um Stufe nach oben bewegt. Hierbei dient die zentrale Bohrung 15 von Fig. 3 mit dem zusätzlich vorgesehenen Schnappring 44 als Gegenlager. Die Übertragung der koordinierten AUF/ZU-Bewegung der Profildurchbrechungen 163 im Grundkörper 5, 161 im Stellring 6, 16 in der Bodenplatte 7 und 162 in der Dichtscheibe 8 erfolgt im Ausführungsbeispiel nach Fig. 10 und 11 vom Stellring 6 ausgehend über vier in die Längsnuten 29 eingreifende Profilstege 32, die an der gemäB Zeichnung aufgekanteten mittleren Bohrung 45 hervorstehen.

Diese Geräte werden vorzugsweise bei Behältern mit kleineren Öffnungsdurchmessern von weniger als etwa 60mm eingesetzt.

Anhand von Fig. 17 und 18 wird ein weiteres Ausführungsbeispiel eines Dosiergeräts erläutert. Dieses Dosiergerät besitzt eine Dosierkammer, deren Volumen sich anders als bei den Dosiergeräten nach Fig. 1 bis 11 durch Verschieben der oberen Bauteile verändern läßt. Für den Einstellmechanismus wird der Behälterhals 2 speziell konstruiert. Die AUF/ZU-Funktion für das Füllen (Vordosieren) und Entleeren der Dosierkammer hingegen entspricht im wesentlichen den oben beschriebenen Ausführungsbeispielen, so daß in der folgenden Erläuterung auf entsprechende Einzelheiten verzichtet werden kann.

Fig. 17 zeigt im Längsschnitt die kleinste und die größte Kulissenstein-Einstellung eines Dosiergeräts mit drei verschiedenen, vorzugebenden Dosiermengen. Eine gegenüber Fig. 17 um 90° gedrehte Außenansicht des Dosiergeräts wird in Fig. 18 dargestellt; die Zeichnung entspricht der linken Einstellung gemäß Fig. 17 mit dem kleinsten Dosiervolumen. Vorzugsweise wird das Gerät mit einer solchen Einstellung versandt.

Das Dosiergerät 1 nach Fig. 17 und 18 wird auf einem zylindrischen Behälterhals 2 befestigt. Das Dosiergerät besteht aus dem Unterteil 56, der Dichtscheibe 8, der Stellkappe 46, dem Stellring 6 und dem Ausgießschacht 9. An den Behälterhals 2 werden außen, übereinanderliegend, vorstehende Stellnocken 57 angeformt. Das zylindrische Unterteil 56, das in den Behälterhals 2 eingedrückt werden kann, wird mit einem inneren Haltering 58 und darunter mit einer angeformten Bodenplatte 7 mit vier nicht dargestellten Profildurchbrechungen 16 ähnlich Fig. 7 sowie in der Bodenplatte 7 mit einer runden, zentrisch angeordneten Bohrung 15 ausgestattet.

Die Dichtscheibe 8 wird axial unter dem Haltering 58 drehbar arretiert. Sie erhält eine mittig gelegene Kreuzprofildurchbrechung 59 mit vier nicht dargestellten Profildurchbrechungen ähnlich Fig. 9. Zur Stellkappe 46 gehört ein Außenzylinder 60 mit einer äußeren Profildurchbrechung 61, die bis zum unteren Zylinderrand reicht und durch die die an den Behälterhals 2 angeformten Stellnocken 57 eingeführt und in drei verschiedenen Höhestellungen durch Drehen einzurasten sind. An den Außenzylinder 60 der Stellkappe wird ein Innenzylinder 62 angeformt, der in den Behälterhals 2 bzw. in das eingedrückte Unterteil 56 eingreift. Der Innenzylinder 62 wird durch eine gewissermaßen einen Dosierkammerdeckel bildenden Bodenplatte 25, welche eine Bohrung 15 besitzt, abgeschlossen. Der Stellring 6 greift außen über die Stellkappe 46 und folgt in seiner weiteren Formgebung dem Außenprofil von Innenzylinder 62 und Bodenplatte 25. Im übrigen wird der Stellring 6 mit der Stellkappe 46 durch eine Schnappverbindung 64 drehbar verbunden. Angeformt an die Bodenplatte 25 des Stellrings 6, welche ebenfalls Profildurchbrechungen 16 entsprechend Fig. 9 besitzt, wird eine Kreuzprofilstange 63, die durch die Bohrung 15 der Stellkappe 46, die Kreuzprofildurchbrechung 59 der Dichtscheibe und die Bohrung 15 am Unterteil 56 ragt. Der Ausgießschacht 9 wird im prinzip und funktionell im wesentlichen gleich wie im Ausführungsbeispiel nach Fig. 1 ausgebildet.

Ein typisches Merkmal aller Varianten des erfindungsgemäßen Dosiergeräts besteht darin, daß die Geräteunterkante am Halsansatz des Behälters endet. Auf diese Weise wird eine gute Restentleerung sichergestellt. — Die wesentlichen Bauteile der Ausführungsbeispiele nach Fig. 1, 10 und 17 befinden sich innerhalb des — beispielsweise bisher zum Aufschrauben einer Meßkappe verwendeten — Behälterhalses. Die Bauhöhe wird daher bei Anwendung des neuen Geräts nicht nennenswert erhöht. — Ein produktnachlauf kann bei dem vorliegenden Gerät auch bei ungeschickter Handhabung nicht auftreten. Die Handhabung wird auch dadurch vereinfacht, daß zum Mehrfach- oder Nachdosieren ein gesondertes Schwenken nicht erforderlich ist.

Bezugszeichenliste

1 = Dosiergerät.
2 = Hals.
3 = Behälter.
4 = Gewinde.
5 = Grundkörper.
6 = Stellring.
7 = Bodenplatte bzw. Dosierkammerboden.
8 = Dichtscheibe.
9 = Ausgießschacht.
10 = Zylinderrohr.
11 = Längsnuten.
12 = Schraubring.
13 = Schnappwulst.
14 = Kopfplatte.
15 = Bohrung.
16 = Profildurchbrechung.
17 = Innenwand.
18 = Klemmrippen.
19 = Stirnfläche.
20 = Einstellhinweise.
21 = Zylinderring.
22 = Profilring.
23 = Schnappwulst.
24 = Profilnocken.
25 = Bodenplatte bzw. Dosierkammerdeckel.
26 = Markierungspfeil.
27 = Rohrstück.
28 = Steilgewinde.
29 = Längsnut
30 = Ansatz
31 = Bohrung
32 = Profilsteg
33 = Zylinderwand
34 = Profilrippe
35 = Schnappwulst
36 = Hinterschneidung
37 = Stutzen
38 = Ende
39 = Verschlußplatte
40 = Sollbruchstelle
41 = Dosierkammer
42 = Ziehring
43 = Schnappwulst
44 = Schnappring
45 = Bohrung
46 = Stellkappe
56 = Unterteil
57 = Stellnocken
58 = Haltering
59 = Kreuzprofildurchbrechung
60 = Außenzylinder
61 = Profildurchbrechung
62 = Innenzylinder
63 = Kreuzprofilstange
64 = Schnappverbindung
61 = Profildurchbrechung
62 = Profildurchbrechung
63 = Profildurchbrechung
64 = Schnappverbindung
161 × Profildurchbrechung
162 = Profildurchbrechung
163 = Profildurchbrechung

## Patentansprüche

1. Dosiervorrichtung (1) zum Ausgeben eines rieselfähigen Produkts aus einem Vorratsbehälter (3) mit einer durch Umwenden in eine Tieflage durch einen Einlaß aus dem Behälter (3) mit veränderlicher Dosiermenge zu füllenden sowie über einen Auslaß zu entleerenden Dosierkammer (41), wobei die Dosierkammer (41) volumenveränderlich ausgebildet ist und fest miteinander gekoppelte Ein- und Auslaßverschlüsse (5, 6; 7, 8) aufweist, die ein alternatives Verschließen bzw. Öffnen von Einlaß und Auslaß ermöglichen, dadurch gekennzeichnet, daß der dem Vorratsbehälter (3) zugewandte Dosierkammerboden (7) oder der dem Vorratsbehälter (3) abgewandte und dem Auslaß zugewandte Dosierkammerdekkel (25) in axialer Richtung relativ zum Behälter (3) verstellbar ist.

2. Dosiervorrichtung nach Anspruch 1, dadurch gekennzeichnet, daß der Dosierkammerboden (7) mit Hilfe eines Schraub- er Zugmechanismus verstellbar ist.

3. Dosiervorrichtung nach Anspruch 1, dadurch gekennzeichnet, daß der Dosierkammerdeckel (25) mit Hilfe einer Kulissenstein-Einstellung verstellbar ist.

4. Dosiervorrichtung nach einem der vorangehenden Ansprüche, gekennzeichnet durch ein gemeinsames Betätigungsmittel für die Volumeneinstellung und die Ein- und Auslaßverschlüsse.

5. Dosiervorrichtung nach einem der vorangehenden Ansprüche, gekennzeichnet dadurch, daB ein Stellring (6) vorgesehen ist, der mit dem verstellbaren Dosierkammerboden (7) bzw. Dosierkammerdeckel (25) gekoppelt ist und daß der Schraub- oder Zugmechanismus bzw. die Kulissenstein-Einstellung zum Anheben oder Absenken des Dosierkammerbodens (7) bzw. Dosierkammerdeckels (25) über den Stellring (6) von außerhalb zu betätigen ist.

6. Dosiervorrichtung nach einem der vorangehenden Ansprüche, dadurch gekennzeichnet, daß eine durch den Zugmechanismus bzw. die Kulissenstein-Einstellung vorgegebene Relativstellung von Dosierkammerboden (7) und Dosierkammerdeckel (25) durch Schnappwülste (43, 44), Stellnocken (57) oder dergleichen zu fixieren ist.

7. Dosiervorrichtung nach einem der vorangehenden Ansprüche, dadurch gekennzeichnet, daß eine durch den Schraubmechanismus vorgegebene Relativstellung von Dosierkammerboden (7) und Dosierkammerdeckel (25) durch Nocken (18, 24) oder dergleichen in einem ein alternatives Öffnen und Schließen der Einlaß- und Auslaß öffnung zulassenden Winkelbereich festgelegt ist.

8. Dosiervorrichtung nach einem der vorangehenden Ansprüche, dadurch gekennzeichnet, daß der Einlaß und Auslaß der Dosierkammer (41) aus jeweils mindestens einer Durchbrechung (16 bzw. 161) von Dosierkammerboden (7) und -deckel (25) sowie einer dazu verschiebbar bzw. um eine Gerätelängsachse drehbar gelagerte Dichtscheibe (8) mit mindestens einer kongruenten Durchbrechung (162) besteht.

9. Dosiervorrichtung nach einem der vorangehenden Ansprüche, dadurch gekennzeichnet, daß der Stellring (6) zugleich das Betätigungsmittel zum Voreinstellen der Dosierkammergröße, insbesondere zum Anheben oder Absenken des Dosierkammerbodens (7) bzw. -deckels (25) und zu dem alternativen Öffnen und Schließen von Einlaß und Auslaß bildet.

10. Dosiervorrichtung nach einem der vorangehenden Ansprüche, dadurch gekennzeichnet, daß der Auslaß in einen Ausgießschacht (9) mündet.

11. Dosiervorrichtung nach einem der vorangehenden Ansprüche, gekennzeichnet durch einen im wesentlichen axialsymmetrischen Aufbau in bezug auf die vertikale Gerätedrehachse.

## Revendications

1. Dispositif de dosage (1) adapté pour verser un produit coulant depuis un récipient (3) et comportant une chambre de dosage (41) à remplir avec une quantité à doser variable par l'intermédiaire d'une entrée et à vider par l'intermédiaire d'une sortie en le retournant dans une position inférieure, cette chambre de dosage (41) pouvant recevoir des volumes variables et étant pourvue de fermetures de remplissage et de vidage (5, 6; 7, 8) reliées entre eux de manière fixe, permettant alternativement la fermeture ou l'ouverture de l'entrée et de la sortie, dispositif caractérisé par le fait que le fond (7) de la chambre de dosage, situé face au récipient (3), ou la plaque (25) de cette chambre de dosage, située à l'opposé du récipient et face à la sortie, est réglable dans le sens axial par rapport au récipient (3).

2. Dispositif de dosage selon revendication 1, caractérisé par le fait que le fond (7) de la chambre de dosage est réglable à l'aide d'un mécanisme de fissage ou de traction.

3. Dispositif de dosage selon la revendication 1, caractérisé par le fait que la plaque (25) de la chambre de dosage est réglable à l'aide d'un réglage par coulissement.

4. Dispositif de dosage selon l'une quelconque des revendications 1 à 3, caractérisé par le fait qu'il comporte un moyen de manoeuvre commun pour le réglage du volume et les fermetures de remplissage et de vidage.

5. Dispositif de dosage selon l'une quelconque des revendications 1 à 4, caractérisé par le fait qu'il comporte une bague de positionnement (6) reliée au fond (7) de la chambre de dosage ou à la plaque (25) de la chambre de dosage, et que le mécanisme de vissage ou de traction respectivement ainsi que le réglage par coulissement servant à lever ou à baisser le fond (7) de la chambre de dosage ou à la plaque (25) de la chambre de dosage sont à actionner de l'extérieur par l'intermédiaire de la bague de positionnement (6).

6. Dispositif de dosage selon l'une quelconque des revendications 1 à 5, caractérisé par le fait que chaque position relative du fond (7) de la chambre de dosage et de la plaque (25) de la chambre de dosage, déterminée par le mécanisme de traction ou le réglage par coulissement, est à fixer par l'intermédiaire de bourrelets élastiques (43, 44), de cames de réglage (57) ou similaires.

7. Dispositif de dosage selon l'une quelconque des revendications 1 à 6, caractérisé par le fait que chaque position relative du fond (7) de la chambre de dosage et de la plaque (25) de la chambre de dosage, déterminée par le mécanisme de vissage, est fixée à l'aide de cames profilées (18, 24) ou similaires dans un angle permettant alternativement l'ouverture et la fermeture de l'entrée et de la sortie.

8. Dispositif de dosage selon l'une quelconque des revendications 1 à 7, caractérisé par le fait que l'entrée et la sortie de la chambre de dosage (41) sont constituées respectivement par au moins une ouverture profilée (16, 161) respectivement entre le fond (7) de la chambre de dosage et la plaque (25) de la chambre de dosage, ainsi que d'une rondelle d'étanchéité (8) coulissant par rapport à celle-ci ou placée de façon pivotante autour d'un axe longitudinal du dispositif et comprenant au moins une ouverture profilée (162) adaptée.

9. Dispositif de dosage selon l'une quelconque des revendications 1 à 8, caractérisé par le fait que la bague de positionnement (6) sert en même temps de moyen de manoeuvre pour prérégler les dimensions volumétriques de la chambre de dosage, notamment pour lever ou pour baisser le fond (7) ou la plaque (25) de la chambre de dosage (41), et pour ouvrir et fermer alternativement son entrée et sa sortie.

10. Dispositif de dosage selon l'une quelconque des revendications 1 à 9, caractérisé par le fait que la sortie débouche dans une cuvette de vidage (9).

11. Dispositif de dosage selon l'une quelconque des revendications 1 à 10, caractérisé par le fait qu'il est conçu sous forme d'une construction pour l'essentiel symétriquement axiale par rapport à l'axe de rotation vertical de l'appareil.

**Claims**

1. Metering device (1) for the issue of a pourable product from a storage container (3) with a metering chamber (41), which is to be emptied by way of an outlet as well as to be filled through inversion into a low position with variable metered quantity through an inlet out of the container (3), wherein the metering chamber (41) is constructed to be of variable volume and displays inlet and outlet closures (5, 6; 7, 8), which are one firmly coupled with the other and make an alternative opening or closing of inlet and outlet possible, characterised thereby, that the metering chamber base (7) facing the storage container (3) or the metering chamber lid (25) remote from the storage container (3) and facing the outlet is resettable in axial direction relative to the container (3).

2. Metering device according to claim 1, characterised thereby, that the metering chamber base (7) is resettable with the aid of a screw or pull mechanism.

3. Metering device according to claim 1, characterised thereby, that the metering chamber lid (25) is resettable with the aid of a sliding block adjustment.

4. Metering device according to one of the preceding claims, characterised by a common actuating means for the volume adjustment and the inlet and outlet closures.

5. Metering device according to one of the preceding claims, characterised thereby, that a setting ring (6) is provided, which is coupled either with the resettable metering chamber base (7) or the resettable metering chamber lid (25) and that either the screw or pull mechanism or the sliding block adjustment for the raising or lowering of either the metering chamber base (7) or the metering chamber lid (25) are actuable from outside by way of the setting ring (6).

6. Metering device according to one of the preceding claims, characterised thereby, that a relative setting, which is given by the pull mechanism or the sliding block adjustment, of the metering chamber base (7) and the metering chamber lid (25) is fixable by snap beads (43, 44), setting dogs (57) or the like.

7. Metering device according to one of the preceding claims, characterised thereby, that a relative setting, which is given by the mechanism of the metering chamber base (7) and the metering chamber lid (25), is fixed by dogs (18, 24) or the like in an angular range permitting an alternative opening or closing of the inlet and outlet openings.

8. Metering device according to one of the preceding claims, characterised thereby, that the inlet and outlet of the metering chamber (41) each consist of at least one respective passage (16 or 161) of the metering chamber base (7) and the metering chamber lid (25) as well as of a sealing plate (8), which is borne to be displaceable relative thereto or to be rotatable about a longitudinal axis of the appliance, with at least one congruent passage (162).

9. Metering device according to one of the preceding claims, characterised thereby, that the setting ring (6) is at the same time the actuating means for the presetting of the metering chamber size, in particular for the raising or lowering of either the metering chamber base (7) or the metering chamber lid (25) and for the alternative opening and closing of the inlet and outlet.

10. Metering device according to one of the preceding claims, characterised thereby, that the outlet opens into a pouring shaft (9).

11. Metering device according to one of the preceding claims, characterised by a substantially axially symmetrical build-up with respect to the vertical axis of rotation of the appliance.

Fig. 1

Fig. 2

19  5  18  14  17  13

15  163  4  12

10

11

Fig. 4

6  21

26  23  24  22  161  25  27  29  28

Fig. 3

20  15  14

18  163

19

5

AUF–4.–ZU
AUF–3.–ZU
AUF–2.–ZU
AUF–1.–ZU

Fig. 5

25  161

26

6

Fig. 6

Fig. 8

Fig. 7

Fig. 9

Fig. 10

Fig. 11

Fig. 17

Fig. 18